# EUROPEAN PATENT APPLICATION

(11) **EP 4 535 548 A1**
(43) Date of publication of application: **09.04.2025**
(21) Application number: 24198335.2
(22) Date of filing: 04.09.2024
(51) Int. Cl.: H01M 50/528, H01M 50/533, H01M 50/536, H01M 50/552, H01M 50/566, B23K 11/14

(54) **BATTERY AND BATTERY PACK**

(30) Priority: 19.09.2023 CN 202322553098 U
(71) Applicant: CALB Group Co., Ltd., Changzhou City, Jiangsu Province (CN)
(72) Inventor: XU, Yunhui, Changzhou City (CN); SHAO, Junhua, Changzhou City (CN); XU, Bowei, Changzhou City (CN); ZHAO, Luhan, Changzhou City (CN)
(74) Representative: Becker, Eberhard

(57) **Abstract**

A battery and a battery pack having the battery are provided. The battery includes an electrode output end and at least one layer of a composite current collector (1) having a tab region (101), the tab region (101) and the electrode output end being welded by resistance welding. The electrode output end has a conductive end portion (203) for conducting electricity to a welding device and a welding surface (201) facing the tab region (101), the welding surface (201) is provided with at least one projection (202) welded to the tab region (101), a conductive contact area A of the conductive end portion (203) is greater than a sum B of projected areas of all the projections (202) on the welding surface (201), and the conductive contact area A is greater than or equal to the projected area D of the conductive end portion (203) on the welding surface (201).

## Description

### BACKGROUND

### Technical Field

The present disclosure relates to the technical field of batteries, and in particular to a battery and a battery pack.

### Description of Related Art

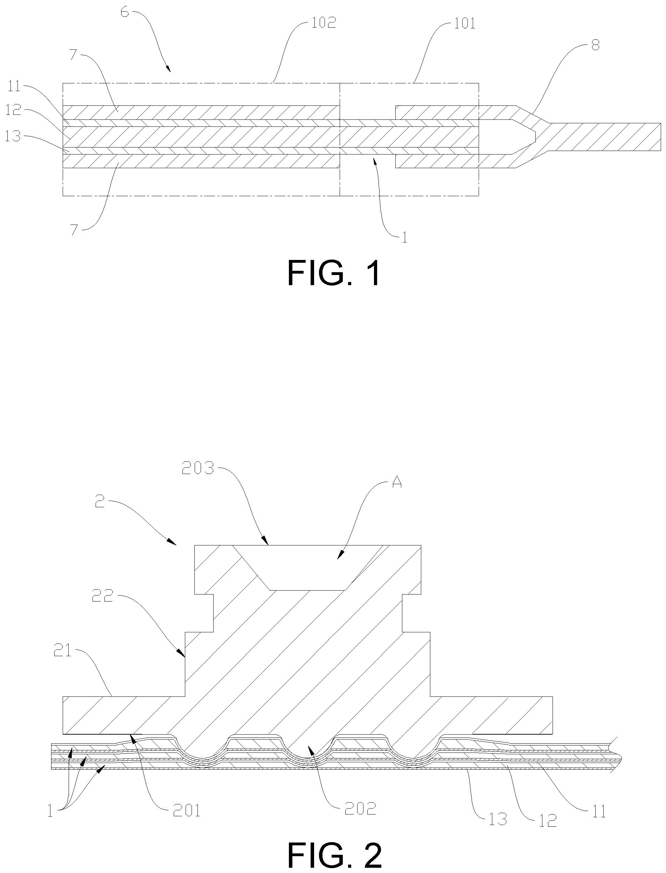

The current collector is a key auxiliary material of lithium ion battery, and the main function is to conduct electricity. The process of converting chemical energy into electric energy is realized by collecting the current generated by the active substances of the battery to form a larger current output. The existing composite current collector is generally of a "sandwich" structure, specifically comprising two conductive layers sandwiching a polymer substrate layer, which has the advantages of high safety and high energy density; however, since the polymer substrate layer is non-conductive, the conventional welding method cannot realize welding to the tab. Therefore, as shown in figure 1, a conductive extension piece 8 is welded on two conductive layers 11, 13 of a tab region 101 of a composite current collector 1 in the prior art (in this case, the conductive extension piece 8 serves as a tab), and then a plurality of conductive extension pieces 8 are laminated and then welded to the electrode output end, thereby ensuring the normal use of the battery. However, due to the addition of the conductive extension pieces 8, the stacked application of the plurality of layers of the composite current collector 1 will result in an increase in the overall weight thereof and may also result in the disadvantages of an increase in the overall thickness, a decrease in energy density, an increase in cost, etc.

Therefore, it is necessary to study a new solution of how to realize the direct conduction between the two conductive layers and the electrode output end.

### SUMMARY

In order to overcome at least one of the above-mentioned disadvantages of the prior art, the present disclosure provides a battery, which has a small overall volume, a low weight, a high energy density, a high overall strength improved and good welding stability.

The technical solution adopted by the present disclosure to solve the problem thereof is described in the following contents.

A battery includes an electrode output end and at least one layer of a current collector having a tab region, and the tab region and the electrode output end are welded by resistance welding. The electrode output end has a conductive end portion for conducting electricity to a welding device and a welding surface facing the tab region, the welding surface is provided with at least one projection welded to the tab region, a conductive contact area A of the conductive end portion is greater than a sum B of projected areas of all the projections on the welding surface, and the conductive contact area A is greater than or equal to a projected area D of the conductive end portion on the welding surface; and at the same time, a ratio of the sum B of the projected areas of all the projections on the welding surface to an area C of the welding surface is between 0.02 and 0.5.

In the battery provided by the present disclosure, the tab region of the current collector is welded to the electrode output end by resistance welding, so as to realize current collection, and there is no need to add a conductive extension piece, the overall volume is small, the weight is low, and the energy density is high; on the other hand, when resistance welding is performed, the projection abuts against the tab region of an outer layer, one welding needle of the welding device abuts against the conductive end portion, and another welding needle of the welding device abuts against the tab region of another outer layer, and by controlling the conductive contact area A of the conductive end portion to be greater than the sum B of the projected areas of all the projections on the welding surface, and the conductive contact area A to be greater than or equal to the projected area D of the conductive end portion on the welding surface, the current flow area of the conductive end portion is greater than the current flow area of all the projections, and thus the heat generation efficiency of the projection is greater than the heat generation efficiency of the conductive end portion under the same current flow, reducing or avoiding the influence of the thermal impact generated by the conductive end portion during welding and heat generation on the tab region near the projection, ensuring that the temperature difference is small or nearly zero when the plurality of layers of tab region reach the welding effect, and improving the overall strength and welding stability; at the same time, by controlling the ratio of the sum of the projected areas B of all the projections on the welding surface to the area C of the welding surface to be between 0.02 and 0.5, not only the welding pad can act as a heat dissipation plate, but also the temperature accumulation near the projection during resistance welding can be avoided, and the heat dissipation effect of the welding pad and the temperature thereof can be indirectly controlled by controlling the ratio of the sum of the projected areas B to the area C, and thus thermal impact to the tab region of the outer layer is reduced to avoid fusing the tab, and the size of the welding pad can be controlled to avoid excessive pad weight or volume which further affects energy density of the battery.

Based on the same concept, the present disclosure further discloses a battery pack including the battery described.

### BRIEF DESCRIPTION OF THE DRAWINGS

Figure 1 is a schematic cross-sectional diagram of welding of one conductive extension piece on two conductive layers in the prior art;
Figure 2 is a schematic cross-sectional diagram of a connection between an electrode output end and a composite current collector of an embodiment of the present disclosure;
Figure 3 is a schematic perspective structural diagram of a pole of an embodiment of the present disclosure;
Figure 4 is a bottom schematic diagram of the pole of an embodiment of the present disclosure ;
Figure 5 is a schematic diagram of an abutment of a welding needle and a pole of an embodiment of the present disclosure; and
Figure 6 is another schematic diagram of the abutment of the welding needle and the pole of an embodiment of the present disclosure.

The reference numerals have the following meanings:

1, composite current collector; 101, tab region; 102, active substance region; 11, first conductive layer; 12, polymeric substrate layer; 13, second conductive layer; 2, pole; 21, welding pad; 22, post; 23, sink tank; 24, annular end face; 201, welding surface; 202, projection; 203, conductive end portion; 211, first post; 212, second post; 213, transition portion; 214, groove; 23, welding needle; 6, plate; 7, active substance layer; 8, conductive extension piece.

### DESCRIPTION OF THE EMBODIMENTS

For better understanding and applications, the technical solutions of the embodiments of the present disclosure will now be described clearly and fully hereinafter with reference to the accompanying drawings, in which embodiments of the present disclosure are shown.

In the description of the present disclosure, it should be noted that the orientations or positional relationships indicated by the terms "upper", "lower", "front", "rear", "left", "right", "vertical", "horizontal", "top", "bottom", "inner", "outer", etc. are based on the orientations or positional relationships shown in the drawings, merely to facilitate the description of the present disclosure and simplify the description, not to indicate or imply that the devices or elements referred to must have a particular orientation, or be constructed and operated in a particular orientation, and thus should not be construed as limiting the present disclosure.

Unless otherwise defined, all technical and scientific terms used herein have the same meaning as commonly understood by a person skilled in the art to which the present disclosure belongs. The terminology used in the description of the present disclosure herein is for the purpose of describing particular embodiments only and is not intended to be limiting of the present disclosure.

With reference to figure 2, the present disclosure discloses a battery, including an electrode output end and a plurality of layers of tabs. In addition, the present disclosure further discloses a battery pack having the battery. The electrode output end includes a pole 2, and the pole 2 includes a welding pad 21 and a post 22 connected together, wherein the welding pad 21 is configured for welding with the plurality of layers of tabs by resistance welding, and the post 22 is configured for conducting electricity outwards. Preferably, the electrode output end has a welding surface 201, and is based on connecting the plurality of layers of tabs with the pole 2, the welding surface 201 at this time is a side surface, facing the plurality of layers of tabs, of the welding pad 21 and the welding surface 201 is provided with a plurality of spaced projections 202 protruding towards the tab region 101, and the projections 202 are welded with the plurality of layers of tabs. The significance of the provision of the projections 202 is that, in terms of resistance welding, in order to ensure the welding temperature at the time of welding, a current flow area can be reduced by the projections 202 provided on the welding surface 201 to achieve higher heat generation under the same current flow.

With reference to figure 2 to figure 4, a conductive contact area A of a conductive end portion 203 is greater than a sum B of the projected areas of all the projections 202 on the welding surface 201, and the conductive contact area A is greater than or equal to a projected area D of the conductive end portion 203 on the welding surface 201, and at the same time, a ratio of the sum B of the projected areas of all the projections 202 on the welding surface 201 to an area C of the welding surface 201 is between 0.02 and 0.5; the conductive contact area A of the conductive end portion 203 is greater than the sum B of the projected areas of all the projections 202 on the welding surface 201, and the conductive contact area A is greater than or equal to the projected area D of the conductive end portion 203 on the welding surface 201, so that the current flow area of the conductive end portion is greater than the current flow area of all the projections, and thus the heat generation efficiency of the projection is greater than the heat generation efficiency of the conductive end portion under the same current flow, reducing or avoiding the influence of the thermal impact generated by the conductive end portion during welding and heat generation on the tab region near the projection, ensuring that the temperature difference is small or nearly zero when the plurality of layers of tab region reach the welding effect, and improving the overall strength and welding stability; and a ratio of the sum B of the projected areas of all the projections 202 on the welding surface 201 to the area C of the welding surface 201 is between 0.02 and 0.5, so that the welding pad 21 can act as a heat dissipation plate, and when the area ratio is between 0.02 and 0.5, temperature accumulation near the projection 202 during resistance welding can be avoided, and by controlling the ratio of the sum B of the projected areas to the area C, the heat dissipation effect of the welding pad 21 and the temperature thereof can be indirectly controlled, thereby reducing the thermal impact on the tab region 101 of the outer layer, avoiding fusing the tab region 101 or forming splash, which leads to a decrease in welding yield, and when the area ratio is greater than 0.5, the welding pad 21 cannot play a heat dissipation effect, and the fusing risk of the tab region 101 increases, while when the area ratio is less than 0.02, the welding pad 21 is too large, resulting in an increase in the whole weight of the battery and a decrease in energy density, and at the same time, the welded substance is small, and a dummy weld is easily formed, resulting in a decrease in welding strength.

With reference to figure 1 and figure 2, a preferred embodiment of the present solution includes an electrode output end and at least one layer of a composite current collector 1. As known, with reference to figure 1, the composite current collector 1 has a tab region 101 and an active substance region 102, and the composite current collector 1 includes a first conductive layer 11, a polymer substrate layer 12 and a second conductive layer 13, wherein after the first conductive layer 11 and the second conductive layer 13 are stacked, the polymer substrate layer 12 is sandwiched therebetween, wherein a part of a surface of the composite current collector 1 is adhered with an active substance layer 7 as the active substance region 102, and a part of the surface of the composite current collector 1 is exposed so as to serve as the tab region 101.

Preferably, with reference to figure 2, the tab region 101 of the composite current collector 1 and the electrode output end are welded by resistance welding, during the resistance welding process, the upper and lower welding needles of the welding device press the electrode output end into contact with the composite current collector 1 so that the projection 202 on the welding surface 201, facing the composite current collector 1, of the electrode output end is in close contact with the composite current collector 1, and the electrode output end is heated and pressurized, and the polymer substrate layer 12 in the composite current collector 1 at a position corresponding to the projection 202 is melted and pressed to the periphery, so that the first conductive layer 11 and the second conductive layer 13 are in contact and conduct electricity, and then the upper and lower electrodes conduct current, and the two conductive layers 11, 13 of the composite current collector 1 and the electrode output end are directly welded together through self-resistance heating (namely, with regard to the plurality of layers of composite current collector 1, after the tab region 101 of the plurality of layers of composite current collector 1 is stacked, the tab region 101 is directly welded with the electrode output end through resistance welding) so as to realize current collection, and thus the energy density of the battery is high; at the same time, the welding efficiency of the direct resistance welding is much higher than the welding efficiency of welding the electrode output end after splicing the conductive extension piece 8 in the prior art, and the production materials can be reduced, with great advantages in terms of production costs.

In particular applications, the active substance layer 7 can be coated on a surface side of the active substance region 102 of the composite current collector 1 so as to constitute a plate 6 in the battery, the tab region 101 of the composite current collector 1 constitutes a tab of the plate 6, and the plate 6 can be stacked in a plurality of layers, namely, the composite current collector 1 is stacked in a plurality of layers, wherein, in particular, the tab regions 101 of the plurality of layers of composite current collector 1 are stacked; the aforementioned welding of the tab region 101 of the composite current collector 1 and the electrode output end by resistance welding can also be understood as welding of the tab of the plate 6 and the electrode output end by resistance welding.

It needs to be stated that, in the process of practical use, the plates in the battery are stacked one on another, namely, the plurality of layers of the composite current collector are stacked; in order to facilitate understanding, in figure 2, the quantity of layers of the composite current collector 1 is only shown as three layers, and the quantity of layers of the composite current collector 1 is not limited in the present disclosure.

With reference to figure 2, the electrode output end preferably has a conductive end portion 203 facing away from the tab region 101 for conducting electricity to the welding device and a welding surface 201 facing towards the tab region 101, and the welding surface 201 are provided with at least one projection 202 for welding to the tab region 101.

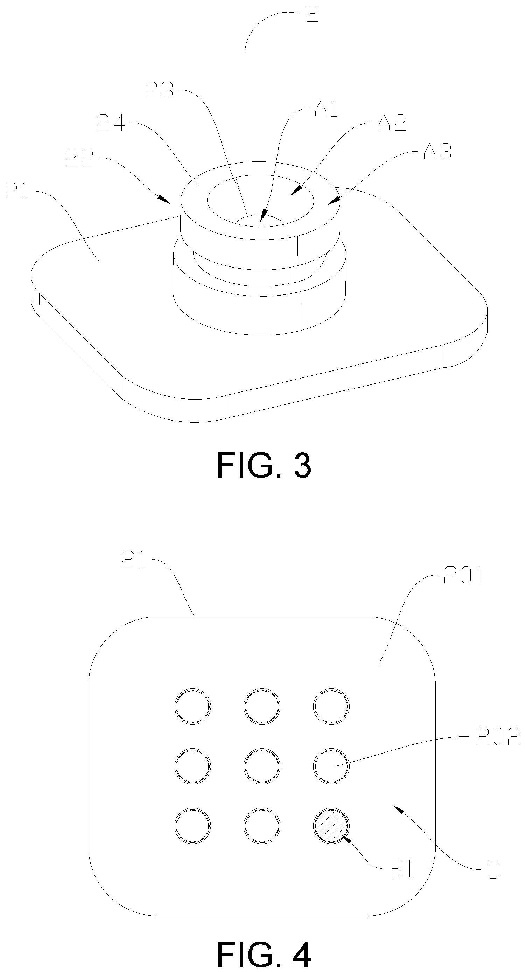

With reference to figure 3, as a specific example, the electrode output end includes a pole 2 including a welding pad 21 for welding with the tab region 101 of the composite current collector 1 by resistance welding and a post 22 for conducting electricity to the outside, wherein the welding pad 21 and the pole 22 are connected with each other.

Of course, in other embodiments, the electrode output end can also adopt other known structures, and the specific structure of the electrode output end is not limited in the present disclosure. In addition, in the structure in which the electrode output end is resistance-welded to the tab region 101 of the composite current collector 1, the electrode output end may also be resistance-welded to the tab region 101 of the composite current collector 1 using a member such as a bus plate or an adapter piece, and at this time, the conductive end portion 203, the welding surface 201 and the projections 202 can be provided on the bus plate or the adapter piece.

Of course, it is preferable that resistance welding to the tab region 101 of the composite current collector 1 is realized via the welding pad 21 of the post 2.

With reference to figure 2 and figure 3, on the basis of connecting the tab region 101 with the pole 2, in this case, the welding surface 201 is a side face, facing the tab region 101, of the pole 2 and the conductive end portion 203 and the projection 202 are oppositely arranged at two opposite ends of the pole 2, so as to facilitate the provision of a pressing force for the welding needle 3 in the welding device. Specifically, the conductive end portion 203 is provided with a sink tank 23 opening in a direction away from the welding surface 201, and the conductive end portion 203 is formed with an annular end face 24 in a circumferential direction of an opening of the sink tank 23, so that the sink tank 23 can be used to increase the contact area between the welding needle and the conductive end portion, thereby increasing the current flow area and reducing the heat generation amount of a contact interface during welding; and, at the same time, the sink tank 23 cooperating with the welding needle 3 can also facilitate the positioning of the welding needle 3 and improve the welding efficiency.

On the basis of the above-mentioned structure of the pole 2, a first end of the post 22 is connected to a first side surface of the welding pad 21, and a second end of the post 22 is provided with the conductive end portion 203, that is to say, it can be understood that the sink tank 23 and the annular end face 24 are provided on the second end of the post 22, the second side surface of the welding pad 21 is the welding surface 201, and the projection 202 is provided on the second side surface of the welding pad 21. In this manner, after the current of the welding needle 3 passes through the post 22 and the welding pad 21, the current flows from the projection 202 to the tab region 101, and the post 22 and the welding pad 21 can function for heat dissipation.

In the present embodiment, with reference to figure 4, a ratio of the sum B of the projected areas of all the projections 202 on the welding surface 201 to an area C of the welding surface 201 is between 0.02 and 0.5. Specifically, if a projected area of a single projection 202 on the welding surface 201 is B1 and a quantity of projections 202 is n, then B=B1*n. Since the second side surface of the welding pad 21 is the welding surface 201, and the projection 202 is provided on the second side surface of the welding pad 21, the welding pad 21 can serve as a heat dissipation plate, so as to avoid temperature accumulation near the projection 202 during resistance welding. By controlling the ratio of the sum of projected areas B to the area C, the heat dissipation effect of the welding pad 21 and the temperature thereof are indirectly controlled, thereby reducing the thermal impact on the tab region 101 of the outer layer and avoiding fusing or softening the polymer substrate layer 12 at a non-welding position, and a size of the welding pad 21 can also be controlled so as to avoid that the weight or volume of the welding pad 21 is too large to affect the energy density of the battery.

The quantity of n can be 1, 2, 3, 4, 5, 6, 7, 8, or 9; with reference to figure 2 and figure 4, as a specific example, the projections 202 are preferably provided in nine, wherein the nine projections 202 are arranged in a matrix-type lattice, and a radius of the projection 202 can be 0.6 mm, thus the projected area B1≈1.13 mm², and the sum of the projected areas B≈10.17 mm²; a radius of an upper bottom of the sink tank 23 is 2 mm, a radius of a lower bottom of the sink tank 23 is 1 mm, a height of the sink tank 23 is 1.2 mm, and an outer radius of the annular end face 24 is 3 mm, and therefore the area of the bottom wall A1≈3.14 mm², the area of the circumferential side wall A2≈14.72 mm², the area of the annular end face 24 A3≈15.7 mm², and then the conductive contact area A≈17.86 mm² or 33.56 mm²; the welding surface 201 has a substantially rectangular shape with a width of 13 mm, a length of 15 mm and a radius of a rounded angle at the corner of 3 mm, so that the area C≈187.26 mm². At this time, A/B≈1.76 or 3.3, B/C≈0.054.

Of course, the plurality of projections 202 may also be arranged in a circumference-type lattice. The quantity of the projections 202 is set according to actual needs, and the present disclosure does not define the specific quantity of the projections 202.

The significance of the provision of the projections 202 is that, in terms of resistance welding, in order to ensure the welding temperature at the time of welding, a current flow area can be reduced by the projections 202 provided on the welding surface 201 to achieve higher heat generation under the same current flow; meanwhile, since there is a non-conductive polymer substrate layer 12 in the middle of the composite current collector 1, during the resistance welding, the composite current collector 1 can be pressurized and heated by the projections 202, so that the polymer substrate layer 12 in the composite current collector 1 at a position corresponding to the projections 202 is melted and extruded to the periphery, such that the first conductive layer 11 and the second conductive layer 13 on both sides of the polymer substrate layer 12 are in contact and conduct electricity, and the welding and fixing can be completed.

In particular, the conductive contact area A of the conductive end portion 203 is greater than the sum B of the projected areas of all the projections 202 on the welding surface 201, and the conductive contact area A is greater than or equal to the projected area D of the conductive end portion 203 on the welding surface 201.

The inventors have found the following problems upon study: with reference to the direction shown in figure 2, during the resistance welding, the welding device would have two welding needles as the upper and lower welding needles 3, after the tab regions 101 of the plurality of layers of composite current collector 1 are stacked, there are two tab regions 101 of outer layers (the tab region 101 on an uppermost layer and the tab region 101 on a lowermost layer) in the tab regions 101 stacked in the plurality of layers, one welding needle 3 of the welding device abuts the conductive end portion 203 in a top-down manner, the projection 202 abuts the tab region 101 on the uppermost layer, and the other welding needle 3 of the welding device abuts the tab region 101 on the lowermost layer in a down-top manner. Since the pole 2 is generally copper or aluminium, the welding needle 3 which is conductive against the conductive end portion 203 is generally an aluminium oxide copper alloy (it needs to be additionally explained that the welding needle 3 which is conductive with the tab region 101 is generally a tungsten copper alloy, the material of the two welding needles is described for the convenience of understanding the issue to be described, and the material of the welding needle 3 is not intended to be limited). The welding needle 3 and the pole 2 are different in material, so there is a greater interface resistance between the welding needle 3 and the conductive end portion 203 in addition to the resistance of the metal itself. If the conductive contact area A of the conductive end portion 203 is less than the projected area of all the projections 202 on the welding surface 201, the heat generation efficiency of the conductive end portion 203 is greater than the heat generation efficiency of the projection 202. If the heat generation efficiency at the conductive end portion 203 is higher, the temperature of the tab region 101 near the pole 2 (the tab region 101 on the uppermost layer) in the plurality of layers of tab region 101 is higher than that of the tab region 101 remote from the pole 2 (the tab region 101 on the lowermost layer), so as to ensure that the tab region 101 on the lowermost layer also achieves a welding effect, while the temperature of the uppermost tab region 101 may be too high, resulting in softening of the polymer substrate layer 12 of the uppermost tab region 101 and deterioration of the strength.

Therefore, according to the above-mentioned solution, by controlling the conductive contact area A of the conductive end portion 203 to be greater than the sum B of the projected areas of all the projections 202 on the welding surface 201, and the conductive contact area A to be greater than or equal to the projected area D of the conductive end portion 203 on the welding surface 201, the current flow area of the conductive end portion 203 is greater than the current flow area of all the projections 202, and then the heat generation efficiency of the projections 202 is greater than the heat generation efficiency of the conductive end portion 203 under the same current flow, reducing or avoiding the influence of the thermal impact generated by the conductive end portion 203 during welding and heat generation on the tab region 101 near the projection 202, ensuring that the temperature difference is small or nearly zero when the plurality of layers of tab region 101 reach the welding effect, and improving the overall strength and welding stability.

In the present embodiment, with reference to figure 2, a thickness of the tab region 101 where the projection 202 is welded to the tab region 101 is less than a thickness of the tab region 101 where the tab region 101 is not welded to the tab region 101 between two adjacent projections 202, that is to say, the plurality of layers of tab at the projection 202 and the projection form an integral structure by welding, and the plurality of layers of tab of the tab region 101 corresponding to the welding surface 201 between the adjacent projections 202 is still of a loose structure, which can not only ensure the fixed connection between the plurality of layers of tab of the tab region 101 and the projection 202, but also ensure that a loose state of the tab between the two projections 202 can improve the flexibility of the connection between the tab and the projection 202, and prevent the plurality of layers of tab of the tab region 101 from tearing.

In the present embodiment, with reference to figure 3, in order to increase the surface area of the sink tank 23 in a limited space and further increase the conductive contact area A, it is preferable that the sink tank 23 is in a shape of an inverted truncated cone, the sink tank 23 has a bottom wall and an inclined circumferential side wall, a shape of a head of the welding needle 3 is adapted to the shape of the sink tank 23, and in a conductive connection with the welding needle 3, the welding needle 3 is inserted into the sink tank 23, and the welding needle 3 can be conductively abutted against the bottom wall and the circumferential side wall of the sink tank 23, so that the shape of the sink tank 23 can both increase the conductive contact area A and facilitate the insertion and positioning of the welding needle (the inclined circumferential side wall has a guiding function).

With reference to figure 2 and figure 3, the bottom wall of the sink tank 23 is preferably planar or spherical, and when the bottom wall of the sink tank 23 is planar, the flatness of the bottom wall can be improved, so that the welding needle 3 is better fitted with the bottom wall, the current flow capacity can be improved and the resistance can be reduced; when the bottom wall of the sink tank 23 is spherical, the contact area between the welding needle 3 and the sink tank 23 can be increased to avoid material sticking of the welding needle 3 during the welding process.

Preferably, the conicity of the sink tank 23 is between 1:2 and 3:1. As an alternative specific example, the conicity of the sink tank 23 is 5:3. In this way, the insertion of the welding needle is easy, the positioning accuracy of the welding needle with the sink tank is higher, and sloshing does not easily occur when the pressing force is supplied.

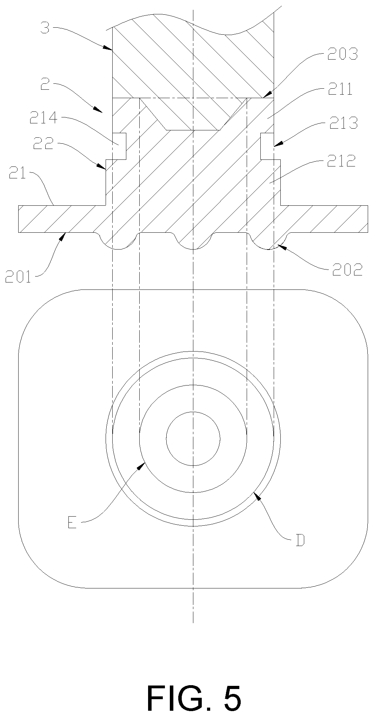

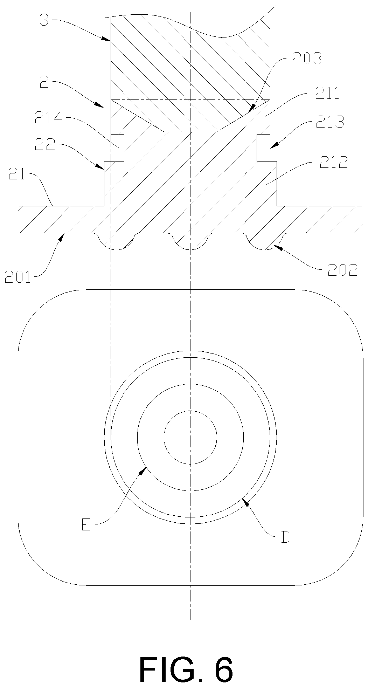

With reference to figure 5 and figure 6, the present embodiment specifically discloses the following two configurations of the conductive end portion 203:
(I) With reference to figure 3 and figure 5, in a first solution, since the conductive end portion 203 is formed with the annular end face 24 in the circumferential direction of the opening of the sink tank 23, the opening area E of the sink tank 23 is less than the projected area D of the conductive end portion 203 on the welding surface 201, and at this time, the conductive contact area A is equal to a sum of an area A1 of the bottom wall and an area A2 of the circumferential side wall and an area A3 of the annular end face 24. During resistance welding, the welding needle 3 may be conductively abutted against the bottom wall, the circumferential side wall and the annular end face 24 of the sink tank 23.
(II) With reference to figure 6, in a second solution, the opening of the sink tank 23 is maximized, and the annular end face 24 is eliminated, so that the opening area E of the sink tank 23 is equal to the projected area D of the conductive end portion 203 on the welding surface 201, and in this case, the conductive contact area A is equal to the sum of the area A1 of the bottom wall and the area A2 of the circumferential side wall. In the resistance welding, the welding needle 3 is conductively abutted only against the bottom wall and the circumferential side wall of the sink tank 23.

In the present embodiment, it is preferable that the ratio of the conductive contact area A of the conductive end portion 203 to the sum B of the projected areas of all the projections 202 on the welding surface 201 is between 1.5 and 15. As such, after satisfying that a hottest position at the time of welding is the projection 202, the conductive end portion 203 is controlled so as not to be too large to avoid the problem that the welding needle is not easily positioned. More preferably, the ratio of the conductive contact area A to the sum B of the projected areas is between 1.5 and 8. This design can avoid causing excessive concentration of heat during welding between the projection and the tab region, and at the same time, avoiding that the area at the conductive end portion is too large so as to affect the current flow transmission outside the battery, and at the same time, making the surface area of the conductive end portion 203 not too large, i.e. avoiding that opening of the sink tank is too large or too deep thus affecting the fixation strength between the electrode output end and a housing of the battery.

With reference to figure 2 and figure 6, the post 22 is provided with a first post 211, a second post 212 and a transition portion 213 in a height direction, the first post 211 and one end of the second post 212 are connected via the transition portion 213, and the other end of the second post 212 is fixed with the welding pad 21, wherein a width of the post 22 in a radial direction is inconsistent, that is to say, a width of the first post 211 in the radial direction is less than a width of the second post 212 in the radial direction, so that during the resistance welding, the post is prevented from being overheated due to excessive volume resistance, and the electrode output end is fixed with the housing of the battery, the electrode output end and the housing of the battery are provided with an insulating member. Therefore, this design can prevent the post from being overheated to affect the insulating performance between the electrode output end and a metal housing.

With reference to figure 2 and figure 6, the side wall of the post 22 is provided with a groove 214, and preferably the groove 214 is provided on the transition portion 213. The groove 214 is configured for limiting when the electrode output end is fixed with the housing of the battery, and a projection of the projected groove 214 along the radial direction of the post 22 is not coinciding with a projection of the conductive end portion 203, namely, a shortest distance of the conductive end portion 203 from the welding pad 21 is greater than a maximum distance of the groove 214 from the welding pad 21; such a design can ensure the strength of the fixing between the groove and a cover plate, without causing the electrode output end to be unsecured and detached from the housing of the battery due to the opening of the sink tank 23.

The technical means disclosed in the solutions of the present disclosure are not only limited to the technical means disclosed in the above-mentioned implementations, but also include technical solutions composed of any combination of the above-mentioned technical features. It should be noted that a person skilled in the art would have been able to make several improvements and modifications without departing from the principles of the present disclosure, and these improvements and modifications are also considered to be within the scope of protection of the present disclosure.

## Claims

1. A battery, **characterized by** comprising an electrode output end and at least one layer of a current collector (1) having a tab region (101), the tab region (101) and the electrode output end being welded by resistance welding,
wherein the electrode output end has a conductive end portion (203) for conducting electricity to a welding device and a welding surface (201) facing the tab region (101), the welding surface (201) is provided with at least one projection (202) welded to the tab region (101), a conductive contact area A of the conductive end portion (203) is greater than a sum B of projected areas of all the projections (202) on the welding surface (201), and the conductive contact area A is greater than or equal to a projected area D of the conductive end portion (203) on the welding surface (201); and a ratio of the sum B of the projected areas of the projections (202) on the welding surface (201) to an area C of the welding surface (201) is between 0.02 and 0.5.

2. The battery according to claim 1, **characterized in that** a ratio of the conductive contact area A of the conductive end portion (203) to the sum B of the projected areas of all the projections (202) on the welding surface (201) is between 1.5 and 15.

3. The battery according to claim 2, **characterized in that** a ratio of the conductive contact area A of the conductive end portion (203) to the sum B of the projected areas of all the projections (202) on the welding surface (201) is between 1.5 and 8.

4. The battery according to claim 1, **characterized in that** a quantity of the projections (202) is multiple, wherein a projected area of a single projection (202) on the welding surface (201) is B 1, the quantity of the projections (202) is n, the sum of the projected areas of the projections (202) on the welding surface (201) is B=B1*n, and the conductive contact area of the conductive end portion (203) is A > B1*n.

5. The battery according to claim 4, **characterized in that** the quantity of the projections (202) is nine, the projections (202) are arranged in a form of three projections (202) in one row, and three rows of the projections (202) are arranged in an array.

6. The battery according to claim 1, **characterized in that** a thickness of the tab region (101) where the projection (202) is welded to the tab region (101) is less than a thickness of the tab region (101) where the projection (202) is not welded to the tab region (101) between two adjacent projections (202).

7. The battery according to claim 1, **characterized in that** the current collector (1) is a composite current collector; and the composite current collector comprises a first conductive layer, a polymer substrate layer and a second conductive layer, wherein the first conductive layer and the second conductive layer are stacked and then the polymer substrate layer is sandwiched therebetween.

8. The battery according to any one of claims 1 to 7, **characterized in that** the electrode output end comprises a pole (2), the welding surface (201) is a side surface, facing the tab region (101), of the pole (2), the projections (202) and the conductive end portion (203) are oppositely disposed at two opposite ends of the pole (2), the conductive end portion (203) is provided with a sink tank (23) opening in a direction away from the welding surface (201), an opening area E of the sink tank (23) is less than or equal to the projected area D of the conductive end portion (203) on the welding surface (201).

9. The battery according to claim 8, **characterized in that** the sink tank (23) is in a form of an inverted truncated cone, the sink tank (23) has a bottom wall and an inclined circumferential side wall, the opening area E of the sink tank (23) is less than or equal to the projected area D of the conductive end portion (203) on the welding surface (201).

10. The battery according to claim 9, **characterized in that** the opening area E of the sink tank (23) is equal to the projected area D of the conductive end portion (203) on the welding surface (201), and the conductive contact area A is equal to a sum of an area A1 of the bottom wall and an area A2 of the circumferential side wall.

11. The battery according to claim 9, **characterized in that** the opening area E of the sink tank (23) is less than the projected area D of the conductive end portion (203) on the welding surface (201), the conductive end portion (203) is formed with an annular end face (24) in a circumferential direction at an opening of the sink tank (23), and the conductive contact area A is equal to a sum of the area A1 of the bottom wall and the area A2 of the circumferential side wall and an area A3 of the annular end face (24).

12. The battery according to claim 9, **characterized in that** the bottom wall of the sink tank (23) is planar or spherical.

13. The battery according to claim 9, **characterized in that** a conicity of the sink tank (23) is between 1:2 and 3:1.

14. The battery according to claim 8, **characterized in that** the pole (2) comprises a welding pad (21) and a post (22), a first end of the post (22) is connected to a first side surface of the welding pad (21), a second end of the post (22) is provided with the conductive end portion (203), a second side surface of the welding pad (21) is the welding surface (201), and the projection (202) is provided on the second side surface of the welding pad (21).

15. The battery according to claim 14, **characterized in that** the post (22) comprises a first post (211), a second post (212) and a transition portion (213), the first post (211) and one end of the second post (212) are connected by the transition portion (213), wherein the other end of the second post (212) is connected with the welding pad (21); and a length of the first post (211) in a radial direction is less than a length of the second post (212) in the radial direction.

16. The battery according to claim 15, **characterized in that** the transition portion (213) is provided with a groove (214), and, projected in a radial direction of the post (22), the projection of the conductive end portion (203) does not coincide with a projection of the groove (214).

17. A battery pack, **characterized by** comprising the battery according to any one of claims 1 to 16.
